# EUROPÄISCHE PATENTSCHRIFT

(11) **EP 2 926 087 B1**
(45) Veröffentlichungstag und Bekanntmachung des Hinweises auf die Patenterteilung: **19.06.2019**
(21) Anmeldenummer: 13801500.3
(22) Anmeldetag: 26.11.2013
(51) Int. Cl.: G01C 15/06, G01C 15/00

(54) **ZIELOBJEKT FÜR EIN LASERMESSGERÄT UND VERFAHREN ZUM IDENTIFIZIEREN DES ZIELOBJEKTES**
TARGET OBJECT FOR A LASER MEASURING DEVICE AND METHOD FOR IDENTIFYING THE TARGET OBJECT
OBJET CIBLE POUR UN APPAREIL DE MESURE À LASER ET PROCÉDÉ POUR L'IDENTIFICATION DE L'OBJET CIBLE

(30) Priorität: 28.11.2012 DE 102012221760
(43) Veröffentlichungstag der Anmeldung: 07.10.2015
(73) Patentinhaber: Hilti Aktiengesellschaft, 9494 Schaan (LI)
(72) Erfinder: WINTER, Andreas, 6800 Feldkirch (AT)
(74) Vertreter: Hilti Aktiengesellschaft Corporate Intellectual Property
(86) Internationale Anmeldenummer: PCT/EP2013/074705
(87) Internationale Veröffentlichungsnummer: WO 2014/082987

(56) Entgegenhaltungen:
- EP-A1- 2 226 610
- WO-A1-2008/145156
- DE-A1-102010 024 014

## Beschreibung

### Technisches Gebiet

Die vorliegende Erfindung betrifft ein Vermessungssystem mit einem Lasermessgerät und mehreren Zielobjekten sowie ein Verfahren zum Identifizieren eines Zielobjektes.

### Stand der Technik

Zum Vermessen von Zielpunkten werden Lasermessgeräte eingesetzt, die Entfernungen und Richtungen (Winkel) der Zielpunkte bestimmen. Bekannt sind Lasermessgeräte, die als Theodolit, Totalstation, Nivelliergerät oder Laserscanner ausgebildet sind. Die Lasermessgeräte umfassen eine Distanzmesseinrichtung zur Distanzmessung zwischen dem Zielpunkt und der Distanzmesseinrichtung und eine Winkelmesseinrichtung zur Winkelmessung. Das Vermessen der Zielpunkte wird durch Zielobjekte unterstützt, die an den Zielpunkten platziert werden. Die Zielobjekte werden in Vermessungssystemen mit Lasermessgeräten eingesetzt, die einen Suchstrahl und einen Messstrahl aussenden, wobei sich die Wellenlängen für den Suchstrahl und den Messstrahl vorteilhaft unterscheiden. Der Messstrahl wird für die Messaufgabe des Lasermessgerätes, beispielsweise zur Distanz- und/oder Winkelmessung, eingesetzt und der Suchstrahl dient dazu, die Zielobjekte zu finden und zu identifizieren. Aufgrund der unterschiedlichen Aufgaben des Such- und Messstrahls ist der Suchstrahl stark aufgeweitet, um einen größeren Raumbereich zu erfassen, wohingegen ein fokussierter Messstrahl für die Messaufgabe eingesetzt wird. Die Zielobjekte werden unterteilt in passive Zielobjekte, die den Suchstrahl des Lasermessgerätes reflektieren, und aktive Zielobjekte, die den Suchstrahl nicht reflektieren, sondern einen Sendestrahl aussenden. Aktive Zielobjekte haben den Vorteil, dass das Lasermessgerät den Sendestrahl aufgrund einer anderen Wellenlänge von Strahlen, die an reflektierenden Oberflächen reflektiert werden, unterscheiden kann.

EP 1 734 336 A1 offenbart ein aktives Zielobjekt für ein, einen infraroten Suchstrahl und einen Messstrahl aussendendes Lasermessgerät. Das Zielobjekt umfasst eine Reflektoreinrichtung mit mindestens einem Reflektorelement zum Reflektieren des Messstrahls, eine Empfangseinrichtung mit einem Empfangselement zum Empfangen des infraroten Suchstrahls, eine Sendeeinrichtung mit einem Sendeelement zum Aussenden eines sichtbaren oder infraroten Sendestrahls sowie eine Kontrolleinrichtung mit einem Auswerteelement zum Auswerten des empfangenen Suchstrahls und einem Steuerelement zum Steuern der Sende- und Empfangseinrichtungen. Nachteilig an den Zielobjekten ist, dass keine Identifizierung und Unterscheidung der Zielobjekte möglich ist. Die sichtbaren oder infraroten Sendestrahlen weisen für mehrere Zielobjekte in einem Vermessungssystem die gleiche Wellenlänge auf.

Aus WO 2008/145156 A1 ist ein Zielobjekt zur Verwendung mit einem Vermessungsinstrument mit in mehreren Reihen auf einem zylinderförmigen Träger angeordneten LEDs mit identifizierbaren Eigenschaften bekannt.

EP 2 226 610 A1 offenbart ein geodätisches Vermessungssystem und Verfahren zum Identifizieren eines Zielobjekts.

Aus DE 10 2010 024 014 A1 sind ein Verfahren zum Identifizieren eines Zielobjektes mit einem Lasermessgerät sowie ein entsprechendes Vermessungssystem mit einem Lasermessgerät und mehreren identifizierbaren Zielobjekten bekannt. Das Lasermessgerät umfasst eine Lasermesseinrichtung, die einen Messstrahl aussendet und die beispielsweise zur Distanzmessung und/oder zur Winkelmessung ausgebildet ist, eine Kameraeinrichtung als Erfassungseinrichtung für die Kennung der Zielobjekte und eine Kontrolleinrichtung mit einem Steuerelement zum Steuern der Lasermesseinrichtung und der Kameraeinrichtung. Das Zielobjekt umfasst eine Reflektoreinrichtung mit mindestens einem Reflektorelement zum Reflektieren des Messstrahls, eine Sendeeinrichtung mit mindestens einem Sendeelement zum Aussenden eines sichtbaren Sendestrahls, der als Kennung für das Zielobjekt dient, und eine Kontrolleinrichtung mit einem Steuerelement zum Steuern der Sendeeinrichtung. Die Identifizierung der Zielobjekte erfolgt über den sichtbaren Sendestrahl, der als Kennung für die Zielobjekte dient und der zwischen einem ersten und zweiten optischen Zustand verstellbar ist. Bei dem ersten und zweiten optischen Zustand des sichtbaren Sendestrahls kann es sich beispielsweise um verschiedene Wellenlängen oder Polarisationszustände handeln. Als weitere Möglichkeit, zwei verschiedene optische Zustände zu realisieren, wird vorgeschlagen, den sichtbaren Sendestrahl einzuschalten (erster optischer Zustand) und auszuschalten (zweiter optischer Zustand). Das Lasermessgerät ist über Kommunikationsverbindungen mit den Zielobjekten des Vermessungssystems verbunden oder zumindest verbindbar ausgebildet. Zum Aufbau der Kommunikationsverbindungen sind im Lasermessgerät und in den Zielobjekten entsprechende Sende- und Empfangselemente vorgesehen.

Das bekannte Verfahren zum Identifizieren der Zielobjekte weist die folgenden Verfahrensschritte auf: Die Kontrolleinrichtung des Zielobjektes sendet einen Steuerbefehl an die Sendeeinrichtung, die aufgrund des Steuerbefehls einen sichtbaren Sendestrahl in einem ersten optischen Zustand aussendet. Der sichtbare Sendestrahl wird von der Empfangseinrichtung des Messgerätes erfasst und der empfangene Teil des Sendestrahls wird von der Kontrolleinrichtung des Lasermessgerätes ausgewertet. Die Kontrolleinrichtung des Lasermessgerätes übermittelt über die Kommunikationsverbindung einen Steuerbefehl an die Sendeeinrichtung des Zielobjektes, wobei die Sendeeinrichtung aufgrund des Steuerbefehls den sichtbaren Sendestrahl in den zweiten optischen Zustand umschaltet. Der sichtbare Sendestrahl im zweiten optischen Zustand wird von der Empfangseinrichtung des Lasermessgerätes erfasst und von der Kontrolleinrichtung des Lasermessgerätes ausgewertet. Die Kameraeinrichtung nimmt aufgrund des Steuerbefehls eine Folge von zweidimensionalen Bildern des Zielobjektes auf. Die Bilder werden von der Kontrolleinrichtung mittels bekannter Bildverarbeitungstechniken ausgewertet. Die Kontrolleinrichtung bildet ein Differenzbild zwischen dem Kamerabild mit dem Sendestrahl im ersten optischen Zustand und dem Kamerabild mit dem Sendestrahl im zweiten optischen Zustand; im Differenzbild kann das Zielobjekt erkannt und identifiziert werden. Nachteilig ist, dass das Lasermessgerät und das Zielobjekt zur Identifikation des Zielobjektes über eine Kommunikationsverbindung verbunden sein müssen. Außerdem muss das Zielobjekt zumindest grob in Richtung des Lasermessgerätes ausgerichtet sein, damit die Kameraeinrichtung des Lasermessgerätes das Zielobjekt erfasst.

### Darstellung der Erfindung

Die Aufgabe der vorliegenden Erfindung besteht in der Entwicklung eines Vermessungssystems mit einem Lasermessgerät und mehreren Zielobjekten, wobei die Zielobjekte für das Lasermessgerät eindeutig identifizierbar und auch für den Bediener von anderen Zielobjekten zu unterscheiden sind. Außerdem soll der apparative Aufwand im Lasermessgerät zum Identifizieren eines Zielobjekts möglichst gering sein.

Diese Aufgabe wird bei dem eingangs genannten Vermessungssystem erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass die erste und zweite Sendeeinrichtung ausgebildet sind, jeweils einen ersten und zweiten sichtbaren Sendestrahl auszusenden, wobei die Lichtfarbe des ersten sichtbaren Sendestrahls von der Lichtfarbe des zweiten sichtbaren Sendestrahls verschieden ist. Die verschiedenen Lichtfarben, in denen die sichtbaren Sendestrahlen der Zielobjekte ausgestrahlt werden, werden im Vermessungssystem zur Identifizierung der Zielobjekte genutzt. Am ersten Zielobjekt wird eine erste Lichtfarbe eingestellt und am zweiten Zielobjekt eine zweite Lichtfarbe, die von der ersten Lichtfarbe verschieden ist.

Die Verwendung von sichtbaren Sendestrahlen hat gegenüber infraroten Sendestrahlen den Vorteil, dass unerwünschte Reflexionen des Suchstrahls an reflektierenden Flächen, wie Spiegelflächen, Sicherheitswesten, Verkehrsschilder und Nummernschilder, nicht erfasst werden. Eine Sendeeinrichtung, die zwei verschieden farbige sichtbare Sendestrahlen aussendet, bietet den Vorteil, dass die Zielobjekte auf einfache Weise im Differenzbild einer Kameraeinrichtung identifiziert werden können. Außerdem können verschieden farbige sichtbare Sendestrahlen auch vom Bediener eines Vermessungssystems voneinander unterschieden werden.

Unter dem Begriff "sichtbarer Sendestrahl" werden ein einzelner sichtbarer Laserstrahl, mehrere sichtbare Laserstrahlen, die gleichzeitig ausgesandt, aber räumlich voneinander beabstandet sind, und mehrere sichtbare Laserstrahlen, die zeitlich nacheinander ausgesandt werden, zusammengefasst. Bei mehreren Laserstrahlen setzt sich der sichtbare Sendestrahl aus mehreren Teilstrahlen zusammen, die räumlich beabstandet sind oder zeitlich nacheinander ausgesandt werden.

Bevorzugt senden die erste und zweite Sendeeinrichtung jeweils mindestens einen weiteren sichtbaren Sendestrahl aus, wobei die Lichtfarbe des mindestens einen weiteren sichtbaren Sendestrahls von der Lichtfarbe des ersten und zweiten sichtbaren Sendestrahls verschieden ist. Die Lichtfarben der sichtbaren Sendestrahlen werden so gewählt, dass die Lichtfarben anhand ihrer Wellenlängen sicher voneinander zu unterscheiden sind.

In einer ersten bevorzugten Variante weisen die erste und zweite Sendeeinrichtung jeweils eine, den ersten sichtbaren Sendestrahl aussendende erste einfarbige Strahlquelle, eine, den zweiten sichtbaren Sendestrahl aussendende zweite einfarbige Strahlquelle und eine, einen möglichen weiteren sichtbaren Sendestrahl aussendende weitere einfarbige Strahlquelle auf. Die Verwendung von zwei oder mehreren einfarbigen Strahlquellen bietet die Möglichkeit neben der Lichtfarbe eines einzelnen Sendestrahls mehrere Sendestrahlen zur eindeutigen Identifizierung der Zielobjekte zu nutzen. Mit drei einfarbigen Strahlquellen verschiedener Lichtfarbe, beispielsweise rot, grün und blau, lassen sich sieben Zielobjekte von einer Messeinrichtung und einem Bediener identifizieren. Die Zielobjekte verwenden einen roten, grünen oder blauen Sendestrahl, einen Sendestrahl aus zwei Teilstrahlen in rot und grün, rot und blau oder grün und blau oder einen Sendestrahl aus drei Teilstrahlen in rot, grün und blau.

Besonders bevorzugt sind die erste und zweite Strahlquelle sowie mögliche weitere Strahlquellen als einfarbige Leuchtdioden ausgebildet. Einfarbige Leuchtdioden sind kostengünstige Bauteile. Rote, grüne und blaue Leuchtdioden sind kostengünstig erhältlich und ermöglichen eine einfache, kostengünstige und zuverlässige Identifizierung verschiedener Zielobjekte eines Vermessungssystems.

In einer zweiten bevorzugten Variante weisen die erste und zweite Sendeeinrichtung jeweils eine erste mehrfarbige Strahlquelle und eine zweite mehrfarbige Strahlquelle auf, wobei die erste und zweite mehrfarbige Strahlquelle räumlich voneinander beabstandet sind. Dabei sind die mehrfarbigen Strahlquellen besonders bevorzugt als mehrfarbige Leuchtdioden aus zwei oder drei einfarbigen Leuchtdioden in einem Gehäuse ausgebildet.

Die Lichtfarben der sichtbaren Sendestrahlen und/oder der sichtbaren Teilstrahlen sind bevorzugt aus den Lichtfarben rot, orange, gelb, grün, blau und violett ausgewählt, besonders bevorzugt aus den Lichtfarben rot, grün und blau. Die sechs Lichtfarben rot, orange, gelb, grün, blau und violett sind für das Lasermessgerät und den Bediener zuverlässig voneinander zu unterscheiden. Die Wellenlängen des sichtbaren Spektrums liegen zwischen ca. 380 und 750 nm. Im sichtbaren Spektrum werden sechs verschiedene Lichtfarben unterscheiden: violett (380 bis 420 nm), blau (420 bis 490 nm), grün (490 bis 575 nm), gelb (575 bis 585 nm), orange (585 bis 650 nm) und rot (650 bis 750 nm). Die Lichtfarben rot, grün und blau eignen sich besonders für die sichtbaren Sendestrahlen, da rote, grüne und blaue Leuchtdioden kostengünstig erhältlich sind.

In einer bevorzugten Ausführung weisen das erste und zweite Zielobjekt jeweils einen Schalter zum Einstellen der Lichtfarbe des sichtbaren Sendestrahls auf. Über den Schalter stellt der Bediener vor der Identifizierung der Zielobjekte die Lichtfarbe des sichtbaren Sendestrahls ein. An jedem Zielobjekt, das der Bediener einsetzt, wird eine andere Lichtfarbe eingestellt.

Die Aufgabe der Erfindung wird außerdem durch ein Verfahren zum Identifizieren eines Zielobjekts gemäß Anspruch 8 gelöst.

Erfindungsgemäß ist das Verfahren zum Identifizieren eines Zielobjektes, das eine Reflektoreinrichtung mit mindestens einem Reflektorelement, eine Empfangseinrichtung mit mindestens einem Empfangselement, eine Sendeeinrichtung mit mindestens einem Sendeelement und eine Kontrolleinrichtung mit einem Auswerteelement und einem Steuerelement aufweist, durch ein Lasermessgerät, das eine Lasermesseinrichtung mit einem Suchstrahl und einem Messstrahl, eine Kontrolleinrichtung und eine Kameraeinrichtung aufweist, dadurch gekennzeichnet, dass:
▪ ein erster Steuerbefehl von einer Kontrolleinrichtung des Lasermessgerätes an die Lasermesseinrichtung zum Aussenden des Suchstrahls und an die Kameraeinrichtung zum Aufnehmen von Bilder des ersten Raumbereiches ausgesandt wird,
▪ aufgrund des ersten Steuerbefehls der Suchstrahl von der Lasermesseinrichtung in einen ersten Raumbereich auf das Zielobjekt ausgesandt wird und von der Kameraeinrichtung eine Folge von Bildern des ersten Raumbereiches mit eingeschaltetem Suchstrahl aufgenommen wird,
▪ ein zweiter Steuerbefehl von der Kontrolleinrichtung des Lasermessgerätes an die Lasermesseinrichtung zum Ausschalten des Suchstrahls und an die Kameraeinrichtung zum Aufnehmen von Bilder des ersten Raumbereiches ausgesandt wird,
▪ aufgrund des zweiten Steuerbefehls der Suchstrahl von der Lasermesseinrichtung ausgeschaltet und von der Kameraeinrichtung eine Folge von Bildern des ersten Raumbereiches mit ausgeschaltetem Suchstrahl aufgenommen wird,
▪ in der Kontrolleinrichtung des Lasermessgerätes ein Differenzbild aus den Bildern des ersten Raumbereiches mit eingeschaltetem Suchstrahl und den Bildern des ersten Raumbereiches mit ausgeschaltetem Suchstrahl erstellt wird und
▪ das Differenzbild von der Kontrolleinrichtung des Lasermessgerätes ausgewertet wird.

Die Identifizierung eines Zielobjektes mit Hilfe eines sichtbaren Sendestrahls durchzuführen, hat den Vorteil, dass unerwünschte Reflexionen des Suchstrahls, der häufig als infraroter Laserstrahl ausgebildet ist, an reflektierenden Flächen, wie Spiegelflächen, Sicherheitswesten, Verkehrsschilder und Nummernschilder, nicht erfasst werden. Außerdem können verschieden farbige sichtbare Sendestrahlen und damit die Zielobjekte, die die Sendestrahlen aussenden, vom Bediener eines Vermessungssystems voneinander unterschieden werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt.

Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Vermessungssystem bestehend aus einem Lasermessgerät und zwei Zielobjekten, die vom Lasermessgerät identifiziert werden;
- FIGN. 2A, B: ein erfindungsgemäßes Zielobjekt in einer ersten Ausführung (FIG. 2A) und einer zweiten Ausführung (FIG. 2B); und
- FIG. 3: das Zusammenspiel zwischen dem Lasermessgerät und dem erfindungsgemäßen Zielobjekt der FIG. 2A beim Identifizieren des Zielobjektes in Form eines Blockdiagramms.

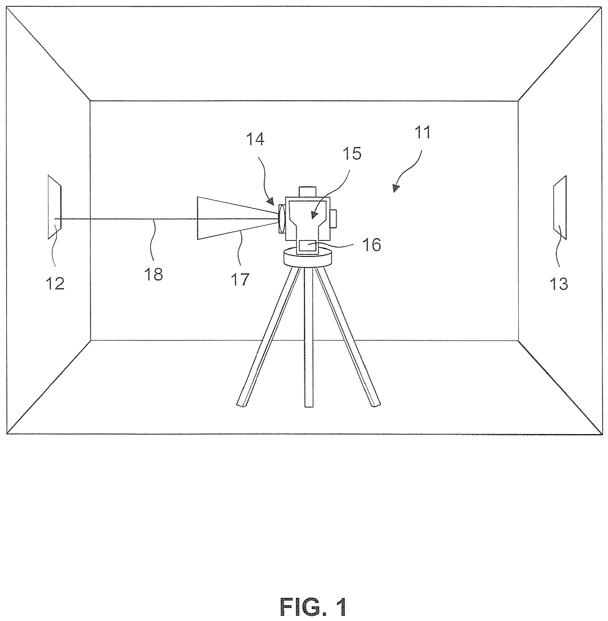

**FIG. 1** zeigt ein Vermessungssystem **10** bestehend aus einem Lasermessgerät **11**, einem ersten erfindungsgemäßen Zielobjekt **12** und einem zweiten erfindungsgemäßen Zielobjekt **13** in einer schematischen Darstellung. Die Zielobjekte 12, 13 sind in einer Messumgebung angeordnet, im Beispiel der FIG. 1 an zwei gegenüber liegenden Wänden eines Raumes. Neben der Befestigung an Wänden oder Decken eines Raumes können die Zielobjekte 12, 13 auf einem Stativ oder einem Lotstock befestigt sein.

Das Lasermessgerät 11 umfasst eine Lasermesseinrichtung **14**, eine Kameraeinrichtung **15** und eine Kontrolleinrichtung **16**. Die Lasermesseinrichtung 14 weist eine erste und zweite Strahlquelle auf, wobei die erste Strahlquelle einen Suchstrahl **17** und die zweite Strahlquelle einen Messstrahl **18** aussendet. Der Suchstrahl 17 dient dazu, Zielobjekte in der Messumgebung zu erkennen und zu identifizieren. Um Bediener und sonstige Personen in der Messumgebung nicht durch den Suchstrahl 17 zu stören, ist der Suchstrahl häufig als infraroter Suchstrahl ausgebildet, wobei sich auch andere Wellenlängen für den Suchstrahl 17 eignen. Der Messstrahl 18 wird beispielsweise zur Laserdistanzmessung und/oder zur Winkelmessung genutzt. Beim Verfahren zum Identifizieren der Zielobjekte 12, 13 wird der Messstrahl 18 nicht eingesetzt. Aufgrund der unterschiedlichen Aufgaben des Suchstrahls 17 und des Messstrahls 18 kann der Suchstrahl 17 stark aufgeweitet sein, um einen größeren Raumbereich zu erfassen, wohingegen für die Messaufgabe ein fokussierter Messstrahl 18 eingesetzt wird.

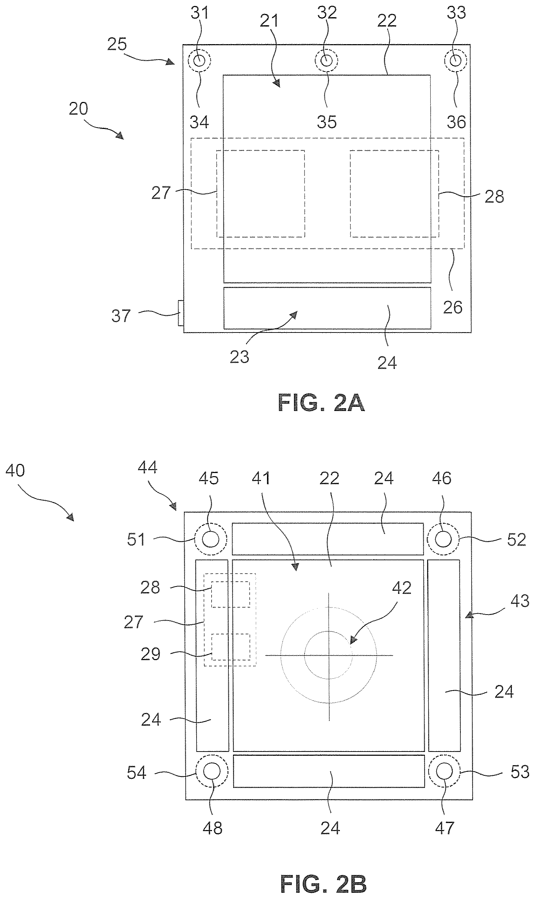

**FIG. 2A** zeigt eine erste Ausführungsform eines erfindungsgemäßen Zielobjektes **20** für das Lasermessgerät 11. Das Zielobjekt 20 kann im Vermessungssystem 10 der FIG. 1 als erstes oder zweites Zielobjekt 12, 13 eingesetzt werden. Zur Unterscheidung von Komponenten des ersten und zweiten Zielobjektes 12, 13 sowie weiterer Zielobjekte des Vermessungssystems 10 wird ein Index "i" verwendet.

Das Zielobjekt 20 umfasst eine Reflektoreinrichtung **21** mit einem Reflektorelement **22** zum Reflektieren des Messstrahls 18, eine Empfangseinrichtung **23** mit einem Empfangselement **24** zum Empfangen zumindest eines Teils des Suchstrahls 17, eine Sendeeinrichtung **25** zum Aussenden eines sichtbaren Sendestrahls und eine Kontrolleinrichtung **26.** Die Kontrolleinrichtung 26 weist ein Auswerteelement **27** zum Auswerten des empfangenen Suchstrahls 17 und ein Steuerelement **28** zum Steuern der Empfangs- und Sendeeinrichtungen 23, 25 auf.

Die Reflektoreinrichtung 21 umfasst im Ausführungsbeispiel der FIG. 1 ein rechteckförmiges, ebenes Reflektorelement 22 zum Reflektieren des Messstrahls 18. Alternativ kann die Reflektoreinrichtung 21 mehrere Reflektorelemente aufweisen und die Reflektorelemente können rund, dreieckförmig oder in einer sonstigen geeigneten Form ausgebildet sein. Die Sendeeinrichtung 25 weist in der in FIG. 1 gezeigten Ausführungsform drei einfarbige Strahlquellen **31**, **32**, **33** auf, die drei sichtbare Sendestrahlen unterschiedlicher Lichtfarbe erzeugen. Die erste Strahlquelle ist beispielsweise als rote Leuchtdiode 31 ausgebildet und erzeugt einen roten Sendestrahl **34** im Wellenlängenbereich zwischen ca. 650 und 750 nm, die zweite Strahlquelle ist als grüne Leuchtdiode 23 ausgebildet und erzeugt einen grünen Sendestrahl **35** im Wellenlängenbereich zwischen ca. 490 und 575 nm und die dritte Strahlquelle ist als blaue Leuchtdiode 33 ausgebildet und erzeugt einen blauen Sendestrahl **36** im Wellenlängenbereich zwischen ca. 420 und 490 nm. Anstelle der drei einfarbigen Strahlquellen 31, 32, 33 kann eine mehrfarbige Strahlquelle, beispielsweise eine mehrfarbige Leuchtdiode mit einer roten, grünen und blauen Leuchtdiode in einem Gehäuse eingesetzt werden.

Mit Hilfe der roten, grünen und blauen Leuchtdioden 31, 32, 33 der Sendeeinrichtung 25 lassen sich sieben Zielobjekte für das Lasermessgerät 11 und den Bediener identifizieren. Das erste Zielobjekt sendet beispielsweise eine roten Sendestrahl 34 aus, das zweite Zielobjekt einen grünen Sendestrahl 35 und das dritte Zielobjekt einen blauen Sendestrahl 36. Das vierte Zielobjekt sendet einen sichtbaren Sendestrahl bestehend aus einem roten und grünen Teilstrahl 34, 35, das fünfte Zielobjekt einen Sendestrahl bestehend aus einem roten und blauen Teilstrahl 34, 36, das sechste Zielobjekt einen Sendestrahl bestehend aus einem grünen und blauen Teilstrahl 35, 36 und das siebte Zielobjekt einen Sendestrahl bestehend aus einem roten, grünen und blauen Teilstrahl 34, 35, 36. Um die Anzahl an identifizierbaren Zielobjekten zu erhöhen, kann zusätzlich zur Lichtfarbe beispielsweise die räumliche Anordnung mehrerer farbiger Teilstrahlen und/oder die zeitliche Abfolge mehrerer farbiger Teilstrahlen genutzt werden.

In den Zielobjekten kann eine Farbfolge für den sichtbaren Sendestrahl hinterlegt sein. Anhand der Farbfolge kann das Lasermessgerät 11 die Zielobjekte identifizieren. Das erste Zielobjekt sendet beispielsweise beim ersten Auftreffen des Suchstrahls einen roten Sendestrahl, beim zweiten Auftreffen einen grünen Sendestrahl und beim dritten Auftreffen einen blauen Sendestrahl. Das zweite Zielobjekt sendet beispielsweise beim ersten Auftreffen des Suchstrahls einen roten Sendestrahl, beim zweiten Auftreffen einen grünen Sendestrahl und beim dritten Auftreffen einen roten Sendestrahl. Zur Identifizierung der Zielobjekte schaltet das Lasermessgerät 11 den Suchstrahl mehrfach ein und aus. Die Kameraeinrichtung 15 des Lasermessgerätes 11 beobachtet das Zielobjekt und nimmt gleichzeitig eine Folge von Bildern des Zielobjektes auf.

Das Zielobjekt 20 weist einen Schalter **37** zum Einstellen der Lichtfarbe des sichtbaren Sendestrahls auf. Der Bediener stellt über den Schalter 37 die Lichtfarbe des Zielobjektes 20 ein. In einem Vermessungssystem mit mehreren Zielobjekten wird vom Bediener an jedem Zielobjekt eine andere Lichtfarbe eingestellt, um die Zielobjekte anhand der Lichtfarbe des sichtbaren Sendestrahls von den anderen Zielobjekten des Vermessungssystems unterscheiden zu können.

Das Zielobjekt 20 benötigt eine Stromversorgung für den Betrieb der Empfangseinrichtung 23, der Sendeeinrichtung 25 und der Kontrolleinrichtung 26. Um den Stromverbrauch zu reduzieren, weist das Zielobjekt 20 zwei Betriebszustände auf. Im Ruhemodus ist die Empfangseinrichtung 23 aktiv. Das Umschalten vom Ruhemodus in den Arbeitsmodus wird vom Suchstrahl 17 des Lasermessgerätes 11 veranlasst. Das Zielobjekt 20 muss sich nur dann im Arbeitsmodus befinden, wenn das Lasermessgerät 11 mit dem Suchstrahl 17 die Messumgebung abtastet. Wenn der Suchstrahl 17 das Zielobjekt 20 erfasst, trifft ein Teil des Suchstrahls 17 auf das Empfangselement 24, das mit der Kontrolleinrichtung 26 verbunden ist. Das Steuerelement 28 der Kontrolleinrichtung 26 schaltet das Zielobjekt 20 in den Arbeitsmodus und aktiviert die Sendeeinrichtung 25. Nach dem Erfassen des Suchstrahls 17 über das Empfangselement 24 bleibt das Zielobjekt 20 für eine voreingestellte Zeit im Arbeitsmodus. Trifft innerhalb dieser Zeit kein weiterer Suchstrahl 17 auf das Empfangselement 24 wird das Zielobjekt 20 in den Ruhemodus umgeschaltet. Die Zeit, in der das Zielobjekt im Arbeitsmodus bleibt, kann vom Bediener beispielsweise über einen weiteren Schalter festgelegt oder verändert werden.

**FIG. 2B** zeigt eine zweite Ausführungsform eines erfindungsgemäßen Zielobjektes **40** für das Lasermessgerät 11, das den Suchstrahl 17 und den Messstrahl 18 aussendet. Das Zielobjekt 40 umfasst eine Reflektoreinrichtung **41** mit dem Reflektorelement 22 zum Reflektieren des Messstrahls 18 und einem Zielelement **42** zum Ausrichten des Messstrahls 18, eine Empfangseinrichtung **43** und eine Sendeeinrichtung **44**. Die Empfangseinrichtung 43 weist vier Empfangselemente 24 zum Empfangen des Suchstrahls 17 auf, die an den vier Seiten des rechteckförmigen Reflektorelementes 22 angeordnet sind. Auf der, dem Reflektorelement 22 abgewandten Rückseite des Zielobjektes 40 sind die Kontrolleinrichtung 26 mit dem Auswerteelement 27 und dem Steuerelement 28 angeordnet.

Die Sendeeinrichtung 42 umfasst vier mehrfarbige Strahlquellen **45, 46, 47, 48**, die beispielsweise als mehrfarbige Leuchtdioden in den Lichtfarben rot, grün und blau ausgebildet sind. Die Strahlquellen sind in den vier Ecken des rechteckförmigen Zielobjektes 40 angeordnet. Die erste Strahlquelle 45 sendet einen ersten sichtbaren Teilstrahl **51** aus, die zweite Strahlquelle 46 einen zweiten sichtbaren Teilstrahl **52**, die dritte Strahlquelle 47 einen dritten sichtbaren Teilstrahl **53** und die vierte Strahlquelle 48 einen vierten sichtbaren Teilstrahl **54.**

Jedes Zielobjekt sendet einen eindeutigen Sendestrahl aus, der sich aus den vier sichtbaren Teilstrahlen 51, 52, 53, 54 zusammensetzt, wobei nicht jeder der vier Teilstrahlen eingeschaltet sein muss. Mit Hilfe der vier dreifarbigen Strahlquellen 45, 46, 47, 48 lassen sich 3⁴ = 81 Zielobjekte identifizieren und voneinander unterscheiden. Für die Anzahl der Zielobjekte gilt bei gleichen Strahlquellen: Anzahl der Farben einer Strahlquelle potenziert mit der Anzahl der mehrfarbigen Strahlquellen.

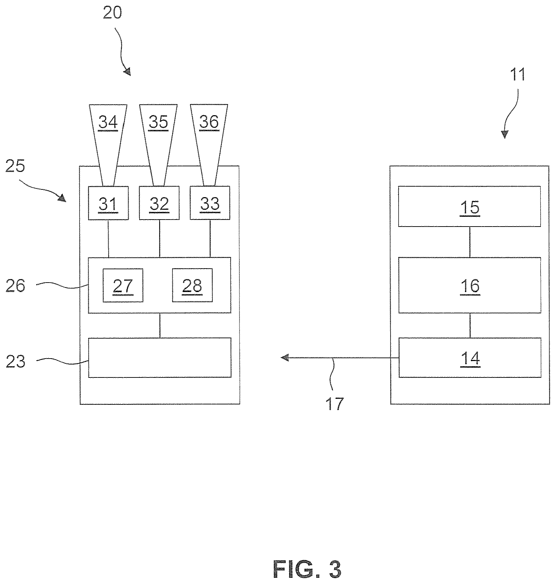

**FIG. 3** zeigt das Zusammenspiel zwischen dem Lasermessgerät 11 und dem erfindungsgemäßen Zielobjekt 20 der FIG. 2A beim Identifizieren des Zielobjektes 20 in Form eines Blockdiagramms. Das Lasermessgerät 11 ist als Totalstation mit der Lasermesseinrichtung 14, der Kameraeinrichtung 15 und der Kontrolleinrichtung 16 ausgebildet. Die Lasermesseinrichtung 14 umfasst eine Strahlquelle zum Aussenden des infraroten Suchstrahls 17.

Das Verfahren zum Identifizieren des Zielobjektes 20 durch das Lasermessgerät 11 weist die folgenden Verfahrensschritte auf: Die Kontrolleinrichtung 16 des Lasermessgerätes 11 sendet einen ersten Steuerbefehl an die Lasermesseinrichtung 14 und die Kameraeinrichtung 15. Aufgrund des ersten Steuerbefehls sendet die Strahlquelle der Lasermesseinrichtung 14 einen ersten Suchstrahl 17 in einen ersten Raumbereich aus und die Kameraeinrichtung 15 nimmt eine Folge von Bildern des ersten Raumbereiches auf. Die Bilder werden als Bilder mit eingeschaltetem Suchstrahl bezeichnet. Die Kontrolleinrichtung 16 des Lasermessgerätes 11 sendet einen zweiten Steuerbefehl an die Lasermesseinrichtung 14 und die Kameraeinrichtung 15 aus. Aufgrund des zweiten Steuerbefehls wird die Strahlquelle der Lasermesseinrichtung 14 ausgeschaltet und die Kameraeinrichtung 15 nimmt eine Folge von Bildern des ersten Raumbereiches auf. Die Bilder werden als Bilder mit ausgeschaltetem Suchstrahl bezeichnet. In der Kontrolleinrichtung 16 wird ein Differenzbild aus den Bildern mit eingeschaltetem Suchstrahl und den Bildern mit ausgeschaltetem Suchstrahl erstellt. Im Differenzbild lässt sich das Zielobjekt 20 mit Hilfe bekannter Bildverarbeitungstechniken erkennen und identifizieren.

Liegt das Zielobjekt 20 im ersten Raumbereich, trifft ein Teil des ersten Suchstrahls 17 auf mindestens ein Empfangselement 24 der Empfangseinrichtung 23. Der empfangene Teil des Suchstrahls 17 wird vom Auswerteelement 27 des Zielobjektes 20 ausgewertet. Das Steuerelement 28 des Zielobjektes 20 übermittelt einen Steuerbefehl an die Sendeeinrichtung 25, die aufgrund des Steuerbefehls den sichtbaren Sendestrahl aussendet. Der sichtbare Sendestrahl ist im Differenzbild zu erkennen. Liegt kein Zielobjekt im ersten Raumbereich, wird der Suchstrahl 17 manuell oder automatisch auf einen zweiten Raumbereich ausgerichtet und die Verfahrensschritte des Messverfahrens werden für den zweiten Raumbereich ausgeführt.

## Patentansprüche

1. Vermessungssystem (10), aufweisend:
▪ ein Lasermessgerät (11), das eine Lasermesseinrichtung (14) mit einem Suchstrahl (17) und einem Messstrahl (18), eine Kontrolleinrichtung (16) zur Erstellung und Auswertung eines Differenzbildes und eine Kameraeinrichtung (15) aufweist,
▪ ein erstes Zielobjekt (12; 20; 40), das eine erste Reflektoreinrichtung (21.1) mit mindestens einem ersten Reflektorelement (22) zum Reflektieren des Messstrahls (18), eine erste Empfangseinrichtung (23.1; 43.1) mit mindestens einem ersten Empfangselement (24) zum Empfangen des Suchstrahls (17), eine erste Sendeeinrichtung (25.1; 44.1) mit mindestens einem ersten Sendeelement (31, 32, 33; 45, 46, 47, 48) und eine erste Kontrolleinrichtung (26.1) mit einem ersten Auswerteelement (27.1) zum Auswerten des empfangenen Suchstrahls (17) und einem ersten Steuerelement (28.1) zum Steuern der Empfangs- und Sendeeinrichtungen (23.1, 25.1; 43.1, 45.1) aufweist, und
▪ ein zweites Zielobjekt (13; 20; 40), das eine zweite Reflektoreinrichtung (21.2) mit mindestens einem zweiten Reflektorelement (22.2) zum Reflektieren des Messstrahls (18), eine zweite Empfangseinrichtung (23.2; 43.2) mit mindestens einem zweiten Empfangselement (24) zum Empfangen des Suchstrahls (17), eine zweite Sendeeinrichtung (25.2; 44.2) mit mindestens einem zweiten Sendeelement (31, 32, 33; 45, 46, 47, 48) und eine zweite Kontrolleinrichtung (26.2) mit einem zweiten Auswerteelement (27.2) zum Auswerten des empfangenen Suchstrahls (17) und einem zweiten Steuerelement (28.2) zum Steuern der Empfangs- und Sendeeinrichtungen (23.1, 25.1; 43.1, 45.1),
wobei die erste und zweite Sendeeinrichtung (25; 44) ausgebildet sind, jeweils einen ersten und zweiten sichtbaren Sendestrahl (34, 35; 51, 52, 53, 54) auszusenden, wobei die Lichtfarbe des ersten sichtbaren Sendestrahls (34; 51, 52, 53, 54) von der Lichtfarbe des zweiten sichtbaren Sendestrahls (35; 51, 52, 53, 54) verschieden ist.

2. Vermessungssystem nach Anspruch 1, **dadurch gekennzeichnet, dass** die erste und zweite Sendeeinrichtung (25; 44) jeweils mindestens einen weiteren sichtbaren Sendestrahl (36; 51, 52, 53, 54) aussenden, wobei die Lichtfarbe des mindestens einen weiteren sichtbaren Sendestrahls (36; 51, 52, 53, 54) von der Lichtfarbe des ersten und zweiten sichtbaren Sendestrahls (34, 35; 51, 52, 53, 54) verschieden ist.

3. Vermessungssystem nach einem der Ansprüche 1 bis 2, **dadurch gekennzeichnet, dass** die erste und zweite Sendeeinrichtung (25; 44) jeweils eine den ersten sichtbaren Sendestrahl (34) aussendende erste einfarbige Strahlquelle (31), eine den zweiten sichtbaren Sendestrahl (35) aussendende zweite einfarbige Strahlquelle (32) und eine einen möglichen weiteren sichtbaren Sendestrahl (36) aussendende weitere einfarbige Strahlquelle (33) aufweisen.

4. Vermessungssystem nach Anspruch 3, **dadurch gekennzeichnet, dass** die erste und zweite Strahlquelle sowie mögliche weitere Strahlquellen jeweils als einfarbige Leuchtdioden (31, 32, 33) ausgebildet sind.

5. Vermessungssystem nach einem der Ansprüche 1 bis 2, **dadurch gekennzeichnet, dass** die erste und zweite Sendeeinrichtung (44) jeweils eine erste mehrfarbige Strahlquelle (45) und eine zweite mehrfarbige Strahlquelle (46) aufweisen, wobei die erste und zweite mehrfarbige Strahlquelle (45, 46) räumlich voneinander beabstandet sind.

6. Vermessungssystem nach einem der Ansprüche 1 bis 5, **dadurch gekennzeichnet, dass** die Lichtfarben der sichtbaren Sendestrahlen (34, 35, 36; 51, 52, 53, 54) aus den Lichtfarben rot, orange, gelb, grün, blau und violett, insbesondere aus den Lichtfarben rot, grün und blau, ausgewählt sind.

7. Vermessungssystem nach einem der Ansprüche 1 bis 6, **dadurch gekennzeichnet, dass** das erste und zweite Zielobjekt (12, 13; 20, 40) jeweils einen Schalter (37) zum Einstellen der Lichtfarbe des sichtbaren Sendestrahls (34, 35, 36) aufweisen.

8. Verfahren zum Identifizieren eines Zielobjektes (20; 40), das eine Reflektoreinrichtung (21; 41) mit mindestens einem Reflektorelement (22), eine Empfangseinrichtung (23; 43) mit mindestens einem Empfangselement (24), eine Sendeeinrichtung (25; 44) mit mindestens einem Sendeelement (31, 32, 33; 45, 46, 47, 48) und eine Kontrolleinrichtung (26) mit einem Auswerteelement (27) und einem Steuerelement (28) aufweist, durch ein Lasermessgerät (11), das eine Lasermesseinrichtung (14) mit einem Suchstrahl (17) und einem Messstrahl (18), eine Kontrolleinrichtung (16) und eine Kameraeinrichtung (15) aufweist, mit den Schritten:
▪ ein erster Steuerbefehl wird von der Kontrolleinrichtung (16) des Lasermessgerätes (11) an die Lasermesseinrichtung (14) zum Aussenden des Suchstrahls (17) in einen ersten Raumbereich und an die Kameraeinrichtung (15) zum Aufnehmen von Bildern des ersten Raumbereiches ausgesandt,
▪ aufgrund des ersten Steuerbefehls wird der Suchstrahl (17) von der Lasermesseinrichtung (14) in den ersten Raumbereich auf das Zielobjekt (20; 40) ausgesandt und von der Kameraeinrichtung (15) wird eine Folge von Bildern des ersten Raumbereiches mit eingeschaltetem Suchstrahl aufgenommen,
▪ ein zweiter Steuerbefehl wird von der Kontrolleinrichtung (16) des Lasermessgerätes (11) an die Lasermesseinrichtung (14) zum Ausschalten des Suchstrahls (17) und an die Kameraeinrichtung (15) zum Aufnehmen von Bildern des ersten Raumbereiches ausgesandt,
▪ aufgrund des zweiten Steuerbefehls wird der Suchstrahl (17) von der Lasermesseinrichtung (14) ausgeschaltet und von der Kameraeinrichtung (15) wird eine Folge von Bildern des ersten Raumbereiches mit ausgeschaltetem Suchstrahl aufgenommen,
▪ in der Kontrolleinrichtung (16) des Lasermessgerätes (11) wird ein Differenzbild aus den Bildern des ersten Raumbereiches mit eingeschaltetem Suchstrahl und den Bildern des ersten Raumbereiches mit ausgeschaltetem Suchstrahl erstellt und
▪ das Differenzbild wird von der Kontrolleinrichtung (16) des Lasermessgerätes (11) ausgewertet.

9. Verfahren nach Anspruch 8, **dadurch gekennzeichnet, dass** das Zielobjekt (20; 40) im Differenzbild von der Kontrolleinrichtung (16) des Lasermessgerätes (11) identifiziert wird, wenn der Suchstrahl (17) der Lasermesseinrichtung (14) im ersten Raumbereich auf ein Empfangselement (24) des Zielobjektes (20; 40) aufgetroffen ist.

10. Verfahren nach Anspruch 8, **dadurch gekennzeichnet, dass** das Zielobjekt (20; 40) im Differenzbild von der Kontrolleinrichtung (16) des Lasermessgerätes (11) nicht identifiziert wird, wenn der Suchstrahl (17) der Lasermesseinrichtung (14) im ersten Raumbereich nicht auf ein Empfangselement (24) des Zielobjektes (20; 40) aufgetroffen ist.

11. Verfahren nach Anspruch 10, **dadurch gekennzeichnet, dass** der Suchstrahl (17) der Lasermesseinrichtung (14) manuell oder automatisch vom ersten Raumbereich auf einen zweiten Raumbereich ausgerichtet wird.

## Claims

1. Surveying system (10), having:
▪ a laser measuring instrument (11), which has a laser measuring device (14) with a search beam (17) and a measuring beam (18), a control device (16) for creating and evaluating a differential image and a camera device (15),
▪ a first target object (12; 20; 40), which has a first reflector device (21.1) with at least one first reflector element (22) for reflecting the measuring beam (18), a first receiving device (23.1; 43.1) with at least one first receiving element (24) for receiving the search beam (17), a first transmitting device (25.1; 44.1) with at least one first transmitting element (31, 32, 33; 45, 46, 47, 48) and a first control device (26.1) with a first evaluating element (27.1) for evaluating the search beam (17) received and a first controlling element (28.1) for controlling the receiving and transmitting devices (23.1, 25.1; 43.1, 45.1), and
▪ a second target object (13; 20; 40), which has a second reflector device (21.2) with at least one second reflector element (22.2) for reflecting the measuring beam (17), a second receiving device (23.2; 43.2) with at least one second receiving element (24) for receiving the search beam (17), a second transmitting device (25.2; 44.2) with at least one second transmitting element (31, 32, 33; 45, 46, 47, 48) and a second control device (26.2) with a second evaluating element (27.2) for evaluating the search beam (17) received and a second controlling element (28.2) for controlling the receiving and transmitting devices (23.1, 25.1; 43.1,45.1),
in which
the first and second transmitting devices (25; 44) are made to each transmit a first and second visible transmission beam (34, 35; 51, 52, 53, 54), in which the light colour of the first visible transmission beam (34; 51, 52, 53, 54) is different from the light colour of the second visible transmission beam (35; 51, 52, 53, 54).

2. Surveying system according to claim 1, **characterized in that** the first and second transmitting devices (25; 44) each transmit at least one further visible transmission beam (36; 51, 52, 53, 54), in which the light colour of the at least one further visible transmission beam (36; 51, 52, 53, 54) is different from the light colour of the first and second visible transmission beams (34, 35; 51, 52, 53, 54).

3. Surveying system according to one of claims 1 to 2, **characterized in that** the first and second transmitting devices (25; 44) each have a first monochrome beam source (31) transmitting the first visible transmission beam (34), a second monochrome beam source (32) transmitting the second visible transmission beam (35) and a further monochrome beam source (33) transmitting a possible further visible transmission beam (36).

4. Surveying system according to claim 3, **characterized in that** the first and second beam sources as well as possible further beam sources are made as monochrome light diodes (31, 32, 33).

5. Surveying system according to one of claims 1 to 2, **characterized in that** the first and second transmitting devices (44) each have a first multicoloured beam source (45) and a second multicoloured beam source (46), in which the first and second multicoloured beam sources (45, 46) are spatially separate from each other.

6. Surveying system according to one of claims 1 to 5, **characterized in that** the light colours of the visible transmission beams (34, 35, 36; 51, 52, 53, 54) are selected from the light colours red, orange, yellow, green, blue and violet, particularly from the light colours red, green and blue.

7. Surveying system according to one of claims 1 to 6, **characterized in that** the first and second target objects (12, 13; 20, 40) each have a switch (37) for adjusting the light colour of the visible transmission beam (34, 35, 36).

8. Method for identifying a target object (20; 40), which has a reflector device (21; 41) with at least one reflector element (22), a receiving device (23; 43) with at least one receiving element (24), a transmitting device (25; 44) with at least one transmitting element (31, 32, 33; 45, 46, 47, 48) and a control device (26) with an evaluating element (27) and a controlling element (28), through a laser measuring instrument (11), which has a laser measuring device (14) with a search beam (17) and a measuring beam (18), a control device (16) and a camera device (15), with the steps:
▪ a first control command is transmitted by the control device (16) of the laser measuring instrument (11) to the laser measuring device (14) to transmit the search beam (17) into a first spatial area and to the camera device (15) to take pictures of the first spatial area,
▪ because of the first control command the search beam (17) is transmitted by the laser measuring device (14) into the first spatial area onto the target object (20; 40) and a series of pictures of the first spatial area is taken by the camera device (15) with the search beam switched on,
▪ a second control command is transmitted by the control device (16) of the laser measuring instrument (11) to the laser measuring device (14) to switch off the search beam (17) and to the camera device (15) to take pictures of the first spatial area,
▪ because of the second control command the search beam (17) is switched off by the laser measuring device (14) and a series of pictures of the first spatial area is taken by the camera device (15) with the search beam switched off,
▪ a differential image is created in the control device (16) of the laser measuring instrument (11) from the pictures of the first spatial area with the search beam switched on and the pictures of the first spatial area with the search beam switched off and
▪ the differential image is evaluated by the control device (16) of the laser measuring instrument (11).

9. Method according to claim 8, **characterized in that** the target object (20; 40) is identified by the control device (16) of the laser measuring instrument (11) in the differential image, if the search beam (17) of the laser measuring device (14) has stricken on a receiving element (24) of the target object (20; 40) in the first spatial area.

10. Method according to claim 8, **characterized in that** the target object (20; 40) is not identified by the control device (16) of the laser measuring instrument (11) in the differential image, if the search beam (17) of the laser measuring device (14) has not stricken on a receiving element (24) of the target object (20; 40) in the first spatial area.

11. Method according to claim 10, **characterized in that** the search beam (17) of the laser measuring device (14) may be adjusted manually or automatically away from the first spatial area towards a second spatial area.

## Revendications

1. Système de mesure (10) comportant :
▪ un appareil de mesure à laser (11) comportant un dispositif de mesure à laser (14) ayant un faisceau de recherche (17) et un faisceau de mesure (18), un dispositif de contrôle (16) pour créer et analyser une image de différence, et un dispositif de caméra (15),
▪ un premier objet cible (12 ; 20 ; 40) comportant un premier réflecteur (21.1) ayant au moins un premier élément réflecteur (22) pour réfléchir le faisceau de mesure (18), un premier récepteur (23.1 ; 43.1) ayant au moins un premier élément de réception (24) pour recevoir le faisceau de recherche (17), un premier émetteur (25.1 ; 44.1) ayant au moins un premier élément d'émission (31, 32, 33 ; 45, 46, 47, 48) et un premier dispositif de contrôle (26.1) ayant un premier élément d'analyse (27.1) pour analyser le faisceau de recherche (17) reçu et un premier élément de commande (28.1) pour commander les récepteurs et les émetteurs (23.1, 25.1 ; 43.1, 45.1), et
▪ un second objet cible (13 ; 20 ; 40) comportant un second réflecteur (21.2) ayant au moins un second élément de réflexion (22.2) pour réfléchir le faisceau de mesure (18), un second récepteur (23.2 ; 43.2) ayant au moins un second élément de réception (24) pour recevoir le faisceau de recherche (17), un second émetteur (25.2 ; 44.2) ayant au moins un second élément d'émission (31, 32, 33 ; 45, 46, 47, 48) et un second dispositif de contrôle (26.2) ayant un second élément d'analyse (27.2) pour analyser le faisceau de recherche (17) reçu et un second élément de commande (28.2) pour commander les dispositifs récepteur et émetteur (23.1, 25.1 ; 43.1, 45.1),
dans lequel les premier et second émetteurs (25 ; 44) sont conçus pour émettre respectivement des premier et second faisceaux d'émission visibles (34, 35 ; 51, 52, 53, 54), dans lequel la couleur de la lumière du premier faisceau d'émission visible (34 ; 51, 52, 53, 54) est différente de la couleur de la lumière du second faisceau d'émission visible (35 ; 51, 52, 53, 54).

2. Système de mesure selon la revendication 1, **caractérisé en ce que** les premier et second dispositifs émetteurs (25 ; 44) émettent respectivement au moins un faisceau d'émission visible supplémentaire (36 ; 51, 52, 53, 54), dans lequel la couleur de la lumière du au moins un faisceau d'émission visible supplémentaire (36 ; 51, 52, 53, 54) est différente de la couleur de la lumière des premier et second faisceaux d'émission visibles (34, 35 ; 51, 52, 53, 54).

3. Système de mesure selon l'une des revendications 1 à 2, **caractérisé en ce que** les premier et second émetteurs (25 ; 44) comportent respectivement une première source de faisceau monochrome (31) émettant le premier faisceau d'émission visible (34), une seconde source de faisceau monochrome (32) émettant le second faisceau d'émission visible (35), et une source de faisceau monochrome supplémentaire (33) émettant un éventuel faisceau d'émission visible supplémentaire (36).

4. Système de mesure selon la revendication 3, **caractérisé en ce que** les première et seconde sources de faisceau ainsi que d'éventuelles sources de faisceau supplémentaires sont respectivement formées comme des diodes électroluminescentes monochromes (31, 32, 33).

5. Système de mesure selon l'une des revendications 1 à 2, **caractérisé en ce que** les premier et second émetteurs (44) comportent respectivement une première source de faisceau polychrome (45) et une seconde source de faisceau polychrome (46), dans lequel les première et seconde sources de faisceau polychromes (45, 46) sont spatialement espacées l'une de l'autre.

6. Système de mesure selon l'une des revendications 1 à 5, **caractérisé en ce que** les couleurs de lumière des faisceaux d'émission visibles (34, 35, 36 ; 51, 52, 53, 54) sont choisies parmi les couleurs de lumière rouge, orange, jaune, verte, bleu et violet, en particulier parmi les couleurs de lumière rouge, verte et bleu.

7. Système de mesure selon l'une des revendications 1 à 6, **caractérisé en ce que** les premier et second objets cibles (12, 13 ; 20, 40) comportent respectivement un commutateur (37) pour régler la couleur de la lumière du faisceau d'émission visible (34, 35, 36).

8. Procédé d'identification d'un objet cible (20 ; 40) comportant un réflecteur (21 ; 41) ayant au moins un élément de réflexion (22), un récepteur (23 ; 43) ayant au moins un élément de réception (24), un émetteur (25 ; 44) ayant au moins un élément d'émission (31, 32, 33 ; 45, 46, 47, 48) et un dispositif de contrôle (26) ayant un élément d'analyse (27) et un élément de commande (28), par l'intermédiaire d'un appareil de mesure à laser (11) comportant un dispositif de mesure à laser (14) ayant un faisceau de recherche (17) et un faisceau de mesure (18), un dispositif de contrôle (16) et un dispositif de caméra (15), comportant les étapes consistant à :
▪ transmettre une première instruction de commande du dispositif de contrôle (16) de l'appareil de mesure à laser (11) au dispositif de mesure à laser (14) afin d'émettre le faisceau de recherche (17) dans une première zone spatiale, et au dispositif de caméra (15) afin de recevoir des images de la première zone spatiale,
▪ sur la base de la première instruction de commande, transmettre le faisceau de recherche (17) à l'objet cible (20 ; 40) à partir du dispositif de mesure à laser (14) dans une première zone spatiale et recevoir à partir du dispositif de caméra (15) une séquence d'images de la première zone spatiale avec un faisceau de recherche activé,
▪ transmettre une seconde instruction de commande à partir du dispositif de contrôle (16) de l'appareil de mesure à laser (11) au dispositif de mesure à laser (14) afin de désactiver le faisceau de recherche (17), et au dispositif de caméra (15) afin de recevoir des images de la première zone spatiale,
▪ sur la base de la seconde instruction de commande, désactiver le faisceau de recherche (17) à partir du dispositif de mesure à laser (14) et recevoir à partir du dispositif de caméra (15) une séquence d'images de la première zone spatiale avec le faisceau de recherche désactivé,
▪ dans le dispositif de contrôle (16) de l'appareil de mesure à laser (11), créer une image de différence à partir des images de la première zone spatiale avec un faisceau de recherche activé et des images de la première zone spatiale avec le faisceau de recherche désactivé et
▪ analyser l'image de différence à partir du dispositif de contrôle (16) de l'appareil de mesure à laser (11).

9. Procédé selon la revendication 8, **caractérisé en ce que** l'objet cible (20 ; 40) dans l'image de différence est identifié par le dispositif de contrôle (16) de l'appareil de mesure à laser (11), lorsque le faisceau de recherche (17) du dispositif de mesure à laser (14) est dirigé vers un élément de réception (24) de l'objet cible (20 ; 40) dans la première zone spatiale.

10. Procédé selon la revendication 8, **caractérisé en ce que** l'objet cible (20 ; 40) dans l'image de différence n'est pas identifié par le dispositif de contrôle (16) de l'appareil de mesure à laser (11), lorsque le faisceau de recherche (17) du dispositif de mesure à laser (14) dans la première zone spatiale n'est pas dirigé vers un élément de réception (24) de l'objet cible (20 ; 40).

11. Procédé selon la revendication 10, **caractérisé en ce que** le faisceau de recherche (17) du dispositif de mesure à laser (14) est orienté manuellement ou automatiquement à partir de la première zone spatiale vers une seconde zone spatiale.
